# EUROPÄISCHE PATENTANMELDUNG

(11) **EP 1 396 381 A1**
(43) Veröffentlichungstag der Anmeldung: **10.03.2004**
(21) Anmeldenummer: 03019444.3
(22) Anmeldetag: 28.08.2003
(51) Int. Cl.: B60Q 1/48

(54) **Elektronische Abstandswarnanlage**

(30) Priorität: 06.09.2002 DE 20213978 U
(71) Anmelder: Voit, Stefan, Dipl.-Wirtsch.-Ing., 66386 St. Ingbert (DE)
(72) Erfinder: Voit, Stefan, Dipl.-Wirtsch.-Ing., 66386 St. Ingbert (DE)
(74) Vertreter: Vièl, Christof, Dipl.-Ing.

(57) **Zusammenfassung**

Die Erfindung betrifft eine elektronische Abstandswarnanlage zur Überwachung eines bestimmten Raumes.

Um einen bestimmten Raum eines Anhängers, Transporters oder Lastkraftwagens durch den Fahrer überwachen zu können wird im Rahmen der Erfindung bei einer elektronischen Abstandswarnanlage für die Verwendung bei Fahrzeugen vorgeschlagen, daß optische Warnelemente (1) an mindestens einer Fahrzeugseite, vorzugsweise im hinteren Fahrzeugbereich, angeordnet sind.

## Beschreibung

Die Erfindung betrifft eine elektronische Abstandswarnanlage, insbesondere Einparkhilfe, für die Verwendung bei Fahrzeugen, mit heckseitigen Sensoren zur Überwachung eines bestimmten Raumes, mit einem Steuergerät und mit Mitteln zur Verkabelung der Sensoren und des Steuergerätes und mit akustischen Warnelementen.

Derartige Abstandswarnanlagen sind bekannt, beispielsweise aus der DE 100 03 616 A1.

Häufig werden Abstandswarnanlagen in neuen Fahrzeugen ab Werk eingebaut, wobei die Sensoren in der Regel in die Stoßfänger integriert werden. Neben optischen Warnelementen im Fahrzeuginnern sind in der Regel auch akustische Warnelemente vorgesehen. Allerdings sind derartige Abstandswarnanlagen relativ kostspielig und eine Nachrüstung eines Fahrzeuges mit einer solchen Abstandswarnanlage ist mit vertretbarem Aufwand kaum realisierbar.

Aus der DE 295 14 521 U1 ist eine Vorrichtung zur Abstandsanzeige zwischen Kraftfahrzeugen bekannt, bei der insbesondere akustische Warnelemente vorgesehen sind, die - ebenso wie das Steuergerät - im Innern des Fahrzeuges untergebracht werden.

Eine derartige Vorrichtung ist für die Nachrüstung von Personenkraftwagen zwar grundsätzlich geeignet, erfordert jedoch das Einbringen der akustischen Warnelemente in den Fahrzeuginnenraum, was bei vielen Fahrzeugen nicht ohne weiteres möglich ist. Für Anhänger, Transporter oder Lastkraftwagen kommt diese Vorrichtung aus besagtem Grund sowie wegen des hohen Geräuschpegels nicht in Frage. Gerade bei solchen Fahrzeugen wäre jedoch eine nachrüstbare Abstandswarnanlage von großem Vorteil, da hier das Fahrzeugende und der dahinter liegende Bereich vom Fahrer kaum zu erfassen sind.

Aufgabe der Erfindung ist es daher, eine Abstandswarnanlage zu schaffen, die möglichst schnell nachträglich auch an den obengenannten Fahrzeug einsetzbar ist.

Diese Aufgabe wird erfindungsgemäß dadurch gelöst, daß die optischen Warnelemente an mindestens einer Fahrzeugseite, vorzugsweise im hinteren Fahrzeugbereich, angeordnet sind.

Diese Art der Anordnung ist insbesondere bei Transportern, Lkws und Änhängern von Vorteil, da hierdurch die Verkabelung zwischen Steuergerät und den optischen Warnelementen von der Rückseite des Fahrzeuges eventuell über eine Anhängerkupplung hinweg bis in den Fahrzeuginnenraum entfällt und der Fahrer dennoch beim Rückwärtsfahren durch einen Blick in den Fahrzeugspiegel oder mit nach hinten gewendetem Kopf die optischen Warnelemente erfassen kann. Die nachträgliche Montage der Abstandswarnvorrichtung ist somit schnell und einfach möglich.

Eine Ausbildung der Erfindung besteht darin, daß an beiden Fahrzeugseiten optische Warnelemente angeordnet sind.
Bei dieser Ausgestaltung ist es sowohl möglich, die mit dem linken Sensor ermittelten Abstandswerte auf den linken optischen Warnelementen anzuzeigen und die mit dem rechten Sensor ermittelten Abstandswerte auf den rechten optischen Warnelementen anzuzeigen, da die jeweiligen Abstände ja differieren können oder aber beidseitig eine einheitliche Abstandsanzeige vorzusehen. Es ist auch denkbar, eine Doppelanzeige vorzusehen, bei der auf beiden Fahrzeugseiten auf separaten Warnelementen jeweils die beiden Abstandswerte (links und rechts) angezeigt werden, da beim Rückwärtsfahren mit Einschlag eines Aufliegers oder Anhängers der Fahrer jeweils eine Fahrzeugseite nicht erfassen kann.

Es ist vorteilhaft, daß die optischen Warnelemente im Bereich der hinteren Fahrzeugecke angeordnet sind.

Hierdurch sind die Verkabelungswege vom Steuergerät zu den optischen Warnelementen extrem kurz und der Fahrer kann sowohl die Fahrzeugecke als auch die dort angeordneten optischen Warnelemente beim Rückwärtsfahren erfassen.

Gemäß einer Weiterbildung der Erfindung ist es beispielsweise möglich, daß die optischen Warnelemente als mehrere neben- oder hintereinander angeordnete Leuchtelemente ausgebildet sind und die Zahl der angeschalteten Leuchtelemente mit geringer werdendem Abstand zu einem Hindernis zu- oder abnimmt.

Die Leuchtelemente können hierbei einzeln oder als Leuchtstreifen angeordnet sein. Diese Lösung ermöglicht es dem Fahrer, jeweils an der Länge des beleuchteten Bereiches den dazu proportionalen Abstand zu dem Hindernis mit einem Blick erfassen, gleich ob zu Beginn des Rückwärtsfahrens alle Leuchtelemente angeschaltet sind und mit geringer werdendem Abstand zu dem Hindernis erlöschen oder ob die Leuchtelemente mit geringer werdendem Abstand nach und nach angeschaltet werden.

Im folgenden wird die Erfindung anhand eines Ausführungsbeispiels näher erläutert.

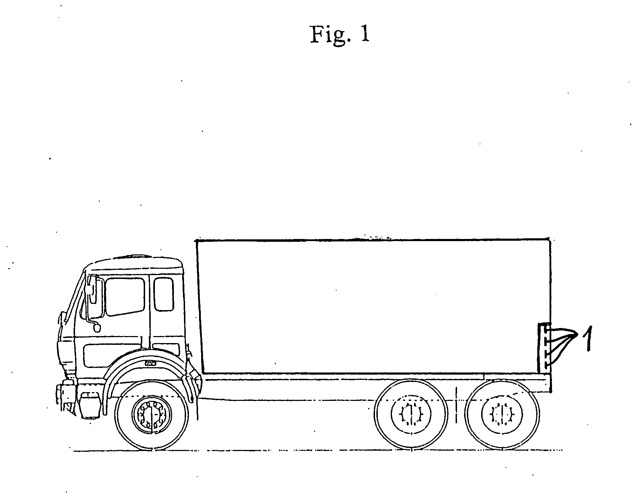

Es zeigt
- Fig. 1: eine Draufsicht auf eine erfindungsgemäße Vorrichtung.

Die optischen Warnelemente 1, die von dem Steuergerät gesteuert werden, werden wie in Fig. 1 dargestellt, bei Transportern, Lkws und Anhängern zweckmäßigerweise an der Fahrzeugseite angeordnet und zwar vorzugsweise mehrere Leuchtelemente (z.B. LEDs in Bänderform, oder als einzelne Leuchtelemente) über- oder nebeneinander, wobei die Zahl der angeschalteten bzw. abgeschalteten Leuchtelemente vorzugsweise proportional zum Abstand zwischen dem Fahrzeugende und einem Hindernis ist. Die Leuchtelemente werden also mit geringer werdendem Abstand nach und nach an- bzw. ausgeschaltet.

Die Anordnung an der Fahrzeugseite im hinteren Bereich des Fahrzeuges, möglichst der Fahrzeugecke, ermöglicht eine extrem schnelle Nachrüstung eines Fahrzeuges mit einer Abstandswarnanlage, da die Verkabelungswege sehr kurz sind. Es kann an jeder Fahrzeugseite ein optisches Warnelement vorgesehen sein oder auch eine Doppelanzeige, die die Abstandswerte der anderen Fahrzeugseite mit anzeigt.

Der Fahrer erkennt beim Rückwärtsfahren dann entsprechend der Anzahl der angeschalteten Leuchtelemente, wieviel Abstand das Fahrzeugende von einem Hindernis noch hat.

## Patentansprüche

1. Elektronische Abstandswarnanlage, insbesondere Einparkhilfe, für die Verwendung bei Fahrzeugen, mit heckseitigen Sensoren zur Überwachung eines bestimmten Raumes, mit einem Steuergerät und mit Mitteln zur Verkabelung der Sensoren und des Steuergerätes und mit optischen Warnelementen, **dadurch gekennzeichnet, daß** daß die optischen Warnelemente (1) an mindestens einer Fahrzeugseite, vorzugsweise im hinteren Fahrzeugbereich, angeordnet sind.

2. Elektronische Abstandswarnanlage gemäß Anspruch 1, **dadurch gekennzeichnet, daß** an beiden Fahrzeugseiten optische Warnelemente (1) angeordnet sind.

3. Elektronische Abstandswarnanlage gemäß Anspruch 1 oder Anspruch 2, **dadurch gekennzeichnet, daß** die optischen Warnelemente (1) im Bereich der hinteren Fahrzeugecke angeordnet sind

4. Elektronische Abstandswarnanlage gemäß einem der Ansprüche 1 bis 3, **dadurch gekennzeichnet, daß** die optischen Warnelemente (1) als mehrere neben- oder hintereinander angeordnete Leuchtelemente ausgebildet sind und die Zahl der angeschalteten Leuchtelemente mit geringer werdendem Abstand zu einem Hindernis zu- oder abnimmt.
